# EUROPEAN PATENT APPLICATION

(11) **EP 4 040 530 A1**
(43) Date of publication of application: **10.08.2022**
(21) Application number: 22154612.0
(22) Date of filing: 01.02.2022
(51) Int. Cl.: H01M 4/133, H01M 4/134, H01M 4/36, H01M 4/38, H01M 4/587, H01M 10/0525, H01M 4/02

(54) **ANODE FOR SECONDARY BATTERY AND LITHIUM SECONDARY BATTERY INCLUDING THE SAME**

(30) Priority: 08.02.2021 KR 20210017517
(71) Applicant: SK On Co., Ltd., Seoul 03188 (KR)
(72) Inventor: JANG, Hwan Ho, 34124 Daejeon (KR); KIM, Moon Sung, 34124 Daejeon (KR); KIM, Hyo Mi, 34124 Daejeon (KR); RYU, Sang Baek, 34124 Daejeon (KR); YOOK, Seung Hyun, 34124 Daejeon (KR); HAN, Jun Hee, 34124 Daejeon (KR)
(74) Representative: Stolmár & Partner Patentanwälte PartG mbB

(57) **Abstract**

Provided is an anode for a lithium secondary battery including an anode electrode current collector; a first anode active material layer formed on a surface of the anode current collector, and a second anode active material layer formed on the first anode material layer. The first anode active material layer includes first anode active material including artificial graphite and a first conductive material that is a carbon-based material except for carbon nanotube. The second anode active material layer includes a second anode active material including a silicon-based active material and carbon nanotube as a second conductive material.

## Description

### CROSS-REFERENCE TO RELATED APPLICATION

This application claims priority to Korean Patent Application No. 10-2021-0017517 filed on February 8, 2021, the disclosure of which is hereby incorporated by reference in its entirety.

### BACKGROUND OF THE INVENTION

### 1. Field of the Invention

The present invention relates to an anode for a secondary battery and a lithium secondary battery including the same. More particular, the present invention relates to an anode for a secondary battery including an anode active material layer of a multi-layered structure and a lithium secondary battery including the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as a hybrid automobile.

The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

A graphite-based material may be used as an active material of the anode. However, as demands for lithium secondary batteries of high capacity/high power has been recently increased, a silicon-based material has been introduced as the anode active material.

However, the silicon-based material may cause shrinkage/expansion according to repeated charge/discharge, which may cause a peel-off of the anode active material layer, a side reaction with the electrolyte, etc.

Thus, developments of an anode active material capable of providing high-capacity property while obtaining sufficient life-span property and operational stability are needed.

For example, Korean Registered Patent Publication No. 10-1057162 discloses a metal-carbon composite anode active material for improving cycle property.

### SUMMARY OF THE INVENTION

According to an aspect of the present invention, there is provided an anode for a secondary battery providing improved capacity and stability.

According to an aspect of the present invention, there is provided a lithium secondary battery including an anode for a secondary battery with improved capacity and stability.

According to exemplary embodiments, an anode for a secondary battery includes an anode electrode current collector, a first anode active material layer formed on a surface of the anode current collector, and a second anode active material layer formed on the first anode material layer. The first anode active material layer includes a first anode active material including artificial graphite. The first anode active material layer does not include carbon nanotube. The second anode active material layer includes a second anode active material including a silicon-based active material and carbon nanotube as a second conductive material.

In some embodiments, the first anode active material may consist of artificial graphite.

In some embodiments, the second anode active material may include a mixture of artificial graphite and the silicon-based active material.

In some embodiments, a content of the silicon-based active material based on a total weight of the second anode active material may be from 9 wt% to 30 wt%.

In some embodiments, a content of the silicon-based active material based on a total weight of the second anode active material may be from 10 wt% to 20 wt%.

In some embodiments, a thickness of the second anode active material layer may be greater than a thickness of the first anode active material layer.

In some embodiments, the first anode active material layer may be in contact with the surface of the anode current collector, and the second anode active material layer may be in contact with a top surface of the first anode active material layer.

In some embodiments, the first anode active material may further include a first conductive material that may be a carbon-based material except for carbon nanotube.

In some embodiments, the first conductive material may include group consisting of graphene, carbon black, acetylene black, Ketjen black, Super P or hard carbon. These may be used alone or in a combination thereof.

In some embodiments, the second anode active material layer further includes a carbon nanotube dispersing agent.

In some embodiments, the silicon-based active material may include silicon (Si), a silicon alloy, SiOx (0<x<2), or SiOx (0<x<2) containing a lithium compound. These may be used alone or in a combination thereof.

According to exemplary embodiments, a lithium secondary battery includes the anode for a secondary battery according to embodiments as described above, and a cathode facing the anode and including a lithium-transition metal composite oxide.

According to exemplary embodiments, a silicon-based active material may be applied to a second anode active material layer spaced apart from a surface of an anode current collector to promote a lithiation from a surface of an anode. Accordingly, high capacity property of the silicon-based active material may be sufficiently implemented.

Artificial graphite may be applied to a first anode active material layer adjacent to the anode current collector to suppress a peel-off of an anode active material layer from the current collector.

In exemplary embodiments, a carbon-based material may be applied as a conductive material to the first anode active material layer, and carbon nanotube may be applied to the second anode active material layer. Accordingly, a bonding strength of the first anode active material layer may be improved, and structural stability of the second anode active material layer may be further improved.

### BRIEF DESCRIPTION OF THE DRAWINGS

FIG. 1 is a schematic cross-sectional view illustrating an anode for a secondary battery in accordance with exemplary embodiments.
FIGS. 2 and 3 are a schematic top planar view and a cross-sectional view, respectively, illustrating a lithium secondary battery in accordance with exemplary embodiments.
FIG. 4 is a graph showing rapid charging cycle properties at room temperature of secondary batteries according to Examples and Comparative Examples.
FIG. 5 is a graph showing results of evaluating 0.3C life-span properties of secondary batteries according to Examples and Comparative Examples.
FIGS. 6 and 7 are images showing states after a full charging of batteries according to Example 1 and Comparative Example 5, respectively.

### DESCRIPTION OF THE INVENTION

According to exemplary embodiments of the present invention, an anode having a multi-layered structure that includes different anode active materials is provided. Further, a lithium secondary battery including the anode is provided.

Hereinafter, the present invention will be described in detail with reference to examples and the accompanying drawings. However, those skilled in the art will appreciate that such embodiments described with reference to the examples and the drawings are provided to further understand the spirit of the present invention and do not limit subject matters to be protected as disclosed in the detailed description and appended claims.

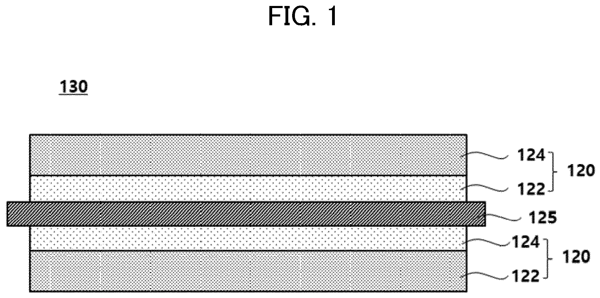

FIG. 1 is a schematic cross-sectional view illustrating an anode for a secondary battery in accordance with exemplary embodiments.

Referring to FIG. 1, an anode 130 may include an anode current collector 125 and an anode active material layer 120 formed by coating an anode active material on the anode current collector 125.

In exemplary embodiments, the anode active material layer 120 may have a multi-layered structure including a first anode active material layer 122 and a second anode active material layer 124.

The anode current collector 125 may include gold, stainless steel, nickel, aluminum, titanium, copper or an alloy thereof, preferably, may include copper or a copper alloy.

The anode active material layer 120 may be formed on at least one surface of the anode current collector 125. The anode active material layer 120 may be coated on each of upper and lower surfaces of the anode current collector 125. The anode active material layer 120 may directly contact the surface of the anode current collector 125.

In exemplary embodiments, the first anode active material layer 122 may be directly formed on the surface of the anode current collector 125. The second anode active material layer 124 may be directly formed on a surface of the first anode active material layer 122 .

A first anode active material included in the first anode active material layer 122 may include a graphite-based active material. Preferably, artificial graphite may be used as the first anode active material. For example, the first anode active material may substantially consist of the artificial graphite.

In some embodiments, the first anode active material may include a mixture of natural graphite and artificial graphite, and a content of artificial graphite may be greater than a content of natural graphite. For example, the content of artificial graphite may be about 70% or more, preferably about 80% or more, and more preferably about 90% or more based on a total weight of the first anode active material.

Artificial graphite may be disadvantageous from an aspect of capacity when being compared to natural graphite, but may have relatively improved mechanical and chemical stability. Thus, artificial graphite may be used as a main active material of the first anode active material layer 122, so that structural instability due to an introduction of a silicon-based active material in the second anode active material layer 124 as will be described later may be alleviated or suppressed.

For example, the first anode active material may be stirred with a binder and a first conductive material in a solvent to prepare a first anode slurry. The first anode slurry may be coated on the anode current collector 125, dried and pressed to form the first anode active material layer 122.

The binder may include, e.g., a styrene-butadiene rubber (SBR)-based material, and may be used together with a thickener such as carboxymethyl cellulose (CMC).

In some embodiments, a content of the first anode active material may be from about 90 weight percent (wt%) to 98 wt%, a content of the binder may be from about 1 wt% to 5 wt%, a content of the first conductive material may be from about 0.1 wt% to 5 wt%, and a content of the thickener may be from about 0.5 wt% to 5 wt% based on a total solid content of the first anode slurry.

The second anode active material layer 124 may include a graphite-based active material and a silicon-based active material. In some embodiments, artificial graphite may be used as the graphite-based active material. Preferably, the graphite-based active material included in the second anode active material layer 124 may substantially consist of artificial graphite.

The silicon-based active material may include silicon (Si), a silicon alloy, SiOx (0<x<2), or an SiOx (0<x<2) containing a lithium compound. The SiOx containing the Li compound may be SiOx containing a lithium silicate. The lithium silicate may be present in at least a portion of an SiOx (0<x<2) particle. For example, the lithium silicate may be present at an inside and/or on a surface of the SiOx (0<x<2) particle. In an embodiment, the lithium silicate may include Li₂SiO₃, Li₂Si₂O₅, Li₄SiO₄, Li₄Si₃O₈, etc.

In some embodiments, the silicon-based active material may include a silicon-carbon composite material. The silicon-carbon composite material may include, e.g., silicon carbide (SiC) or a silicon-carbon particle having a core-shell structure.

In some embodiments, a weight ratio of the silicon-based active material based on a total weight of the second anode active material may be from about 9 wt% to 30 wt%. In an embodiment, the weight ratio of the silicone-based active material may be about from 9 wt% to 20 wt%, preferably from about 10 wt% to 20 wt%.

Within the above range, while sufficiently implementing high capacity property from the silicon-based active material, reduction of life-span of a battery due to contraction/expansion by the silicon-based active material may be prevented.

For example, the second anode active material may be stirred with a binder and a second conductive material in a solvent to prepare a second anode slurry. The second anode slurry may be coated on the first anode active material layer 122, dried and pressed to form the second anode active material layer 124.

In some embodiments, the first anode slurry may be coated and dried to form a preliminary first anode active material layer. The second anode slurry may be coated and dried on the preliminary first anode active material layer to form a preliminary second anode active material layer. Thereafter, the preliminary first and second anode active material layers may be pressed together to form the anode active material layer 120 having a multi-layered structure including the first anode active material layer 122 and the second anode active material layer 124.

A binder substantially the same as or similar to that used in the first anode slurry may also be used in the second anode slurry.

In exemplary embodiments, the first conductive material included in the first anode slurry or the first anode active material layer 122, and the second conductive material included in the second anode slurry or the second anode active material layer 124 may be different from each other.

The second conductive material may include carbon nanotube (CNT). For example, multi-walled carbon nanotube (MWCNT) or single-walled carbon nanotube (SWCNT) may be used as the second conductive material.

Carbon nanotube may have relatively high strength and resistance to mechanical stress. Thus, the second conductive material may serve as a buffer to suppress the contraction/expansion by the silicon-based active material included in the second anode active material layer 124 .

In an embodiment, the second conductive material may not include a dot-type conductive material such as carbon black. In an embodiment, the second conductive material may substantially consist of carbon nanotube.

The first conductive material may include a carbon-based conductive material except for carbon nanotube. For example, the first conductive material may include graphene, carbon black, acetylene black, ketjen black, Super P, hard carbon, etc.

Additionally, artificial graphite may be used as the second anode active material together with the silicon-based active material, so that sufficient life-span property may be obtained while increasing capacity from the silicon-based active material.

In some embodiments, the second anode slurry may include a dispersing agent for uniform dispersion of the second conductive material. For example, a CMC-based dispersing agent may be used as a dispersing agent for carbon nanotube.

For example, a content of the second anode active material may be from about 90 wt% to 98 wt%, a content of the binder may be from about 1 wt% to 5 wt%, a content of the second conductive material may be from about 0.1 wt% to 5 wt%, a content of the thickener may be from about 0.5 wt% to 5 wt%, and a content of the dispersing agent may be from about 0.05 wt% to 0.5 wt% based on a total solid content of the second anode slurry.

In some embodiments, a thickness of the second anode active material layer 124 may be greater than a thickness of the first anode active material layer 122. For example, the thickness of the second anode active material layer 124 may be greater than 50% and less than or equal to 90% of a total thickness of the anode active material layer 120.

Within the above range, sufficient capacity may be achieved through the second anode active material layer 124 without an excessive degradation of life-span/stability.

According to the above-described exemplary embodiments, lithiation may be promoted from the surface of the anode 130 by applying the silicon-based active material to the second anode active material layer 124 spaced apart from the surface of the anode current collector 125. Thus, high-capacity property of the silicon-based active material may be sufficiently implemented.

Further, the relatively stable graphite-based active material (e.g., artificial graphite) may be applied to the first anode active material layer 122 adjacent to the anode current collector 125 to suppress the contraction/expansion of the anode active material layer 120.

For example, a peel-off of the anode active material layer 120 from the anode current collector 125 may be prevented by the first anode active material layer 122. As described above, the carbon-based conductive material excluding carbon nanotube may be applied to the first anode active material layer 122, so that bonding strength of the first anode active material layer 122 may be further improved.

Accordingly, sufficient capacity retention property and life-span stability may be obtained even though, e.g., 9 wt% or more or 10 wt% or more of the silicon-based active material is included in the second anode active material layer 124.

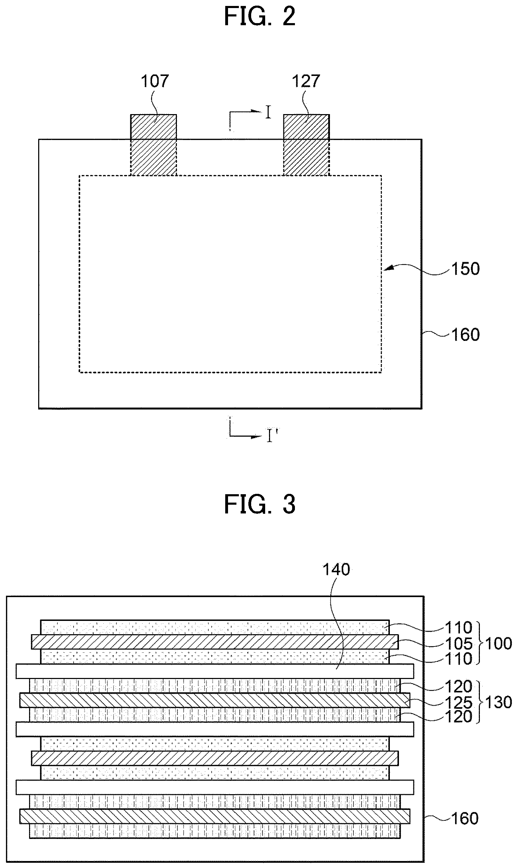

FIGS. 2 and 3 are a schematic top planar view and a cross-sectional view, respectively, illustrating a lithium secondary battery in accordance with exemplary embodiments.

Referring to FIGS. 2 and 3 , the lithium secondary battery may include a cathode 100 and an anode 130, and may further include a separation layer 140 interposed between the cathode 100 and the anode 130.

The cathode 100 may include a cathode active material layer 110 formed by coating a cathode active material on a cathode current collector 105. The cathode active material may include a compound capable of reversibly intercalating and de-intercalating lithium ions.

In exemplary embodiments, the cathode active material may include lithium-transition metal composite oxide particles. For example, the lithium-transition metal composite oxide particle may include nickel (Ni), and may further include at least one of cobalt (Co) and manganese (Mn).

For example, the lithium-transition metal composite oxide particle may be represented by Chemical Formula 1 below.

[Chemical Formula 1] LiₓNi_{1-y}M_{y}O_{2+z}

In Chemical Formula 1, 0.9 ≤ x ≤ 1.1, 0 ≤ y ≤ 0.7, and -0.1 ≤ z ≤ 0.1. M may represent at least one element selected from Na, Mg, Ca, Y, Ti, Zr, Hf, V, Nb, Ta, Cr, Mo, W, Mn, Co, Fe, Cu, Ag, Zn, B, Al, Ga, C, Si, Sn or Zr.

In some embodiments, a molar ratio or concentration of Ni (1-y) in Chemical Formula 1 may be 0.8 or more, and may exceed 0.8 in a preferable embodiment.

Ni may serve as a transition metal related to power and capacity of a lithium secondary battery. Therefore, as described above, a high-Ni composition may be employed in the lithium-transition metal composite oxide particle, so that the cathode and the lithium secondary battery having high capacity and power may be provided.

However, as the content of Ni increases, long-term storage stability and life-span stability of the cathode or the secondary battery may be relatively deteriorated. However, according to exemplary embodiments, life-span stability and capacity retention property may be improved by using Mn while maintaining an electrical conductivity by including Co.

In some embodiments, the cathode active material or the lithium-transition metal composite oxide particle may further include a coating element or a doping element. For example, the coating element or doping element may include Al, Ti, Ba, Zr, Si, B, Mg, P, W, V, an alloy thereof, or an oxide thereof. These may be used alone or in a combination thereof. The cathode active material particle may be passivated by the coating or doping element, thereby further improving life-span and stability with respect to an penetration of an external object.

A slurry may be prepared by mixing and stirring the cathode active material with a binder, a conductive material and/or a dispersing agent in a solvent. The slurry may be coated on the cathode current collector 105, dried and pressed to form the cathode 100.

The cathode current collector 105 may include stainless-steel, nickel, aluminum, titanium, copper or an alloy thereof. Preferably, aluminum or an aluminum alloy may be used.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO3, etc.

As described with reference to FIG. 1, the anode 130 may include the anode current collector 125 and the anode active material layer 120 having a multi-layered structure. For convenience of descriptions, detailed illustrations of the first anode active material layer 122 and the second anode active material layer 124 are omitted in FIG. 3.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In some embodiments, an area (e.g., a contact area with the separator 140) and/or a volume of the anode 130 may be larger than that of the cathode 100. Accordingly, lithium ions generated from the cathode 100 may be efficiently transferred to the anode 130 without being precipitated.

In exemplary embodiments, an electrode cell may be defined by the cathode 100, the anode 130 and the separation layer 140, and a plurality of the electrode cells may be stacked to form an electrode assembly 150 that may have e.g., a jelly roll shape. For example, the electrode assembly 150 may be formed by winding, laminating or folding the separation layer 140.

The electrode assembly 150 may be accommodated together with an electrolyte in a case 160 to define a lithium secondary battery. In exemplary embodiments, a non-aqueous electrolyte may be used as the electrolyte.

For example, the non-aqueous electrolyte solution may include a lithium salt and an organic solvent. The lithium salt and may be represented by Li⁺X⁻. An anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻ , (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination thereof.

As illustrated in FIG. 2, electrode tabs (a cathode tab and an anode tab) may protrude from the cathode current collector 105 and the anode electrode current collector 125 included in each electrode cell to one side of the case 160. The electrode tabs may be welded together with the one side of the case 160 and may be connected to electrode leads (a cathode lead 107 and an anode 127) extending or exposed to an outside of the case 160.

In FIG. 2, the cathode lead 107 and the anode lead 127 are illustrated to protrude from an upper side of the case 160 in a planar view, but the positions of the electrode leads are not limited as illustrated in FIG. 2. For example, the electrode leads may protrude from at least one of both lateral sides of the case 160, or may protrude from a lower side of the case 160. Alternatively, the cathode lead 107 and the anode lead 127 may be formed to protrude from different sides of the case 160 from each other.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

### Examples and Comparative Examples

### 1) Fabrication of Anode

A first anode active material layer (1st layer) and a second anode active material layer (2nd layer) were formed by compositions (parts by weight) and thickness ratios as shown in Table 1, and sequentially formed on a copper foil to form an anode.

Specifically, SWCNT was used as carbon nanotube (CNT) for the second anode active material layer, and CMC was used as a CNT dispersing agent. Carbon black was used as a carbon-based conductive material except for CNT.

In Comparative Example 2, a natural graphite was used as the graphite-based active material. In Examples and Comparative Examples except for Comparative Example 2, artificial graphite was used as the graphite-based active material.

### 2) Fabrication of Cathode and Secondary Battery

In Examples and Comparative Examples, 98.08 parts by weight of an NCM-based cathode active material, 0.6 parts by weight of a carbon black conductive material and 0.12 parts by weight of a dispersing agent, 1.2 parts by weight of a PVDF binder, and NMP were mixed to prepare a cathode slurry. The cathode slurry was coated on an aluminum substrate, dried, and pressed to prepare a cathode.

The cathode and the anode obtained as described above were notched with a proper size and stacked, and a separator (polyethylene, thickness: 13µm) was interposed between the cathode and the anode to form an assembly. Each tab portion of the cathode and the anode was welded.

The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by preparing 1M LiPF₆ in a mixed solvent of EC/EMC/DEC (25/45/30; volume ratio), and then 5 wt% of fluorinated ethylene carbonate (FEC), 0.5 wt% of propane sultone (PS) and 0.5 wt% of ethylene sulfate (ESA) were added.

Thereafter, pre-charging was performed for 48 minutes with a current corresponding to 0.25C. Degasing was performed after 12 hours, and aging was performed for more than 24 hours. Further, a charging and discharging for a formation was performed (charge condition CC-CV 0.25C 4.2V 0.05C CUT-OFF, discharge condition CC 0.2C 2.5V CUT-OFF).

Subsequently, a standard charging and discharging was performed (charge condition CC-CV 0.33 C 4.2V 0.1C CUT-OFF, discharge condition CC 0.33C 2.5V CUT-OFF).

**[Table 1]**

| | Layer Position | Thickness Ratio | Active Material | | | Conductive Material | | CMC | SBR | CNT dispersing agent |
|---|---|---|---|---|---|---|---|---|---|---|
| | | | artificial graphite | natural graphite | SiOx (0<x<2) | CNT | carbon -based | | | |
| Example 1 | 2nd layer | 6 | 82.55 | | 15 | 0.1 | | 1.2 | 1.0 | 0.15 |
| | 1st layer | 4 | 93.80 | | - | | 3.0 | 1.2 | 2.0 | - |
| Example 2 | 2nd layer | 6 | 88.55 | | 9 | 0.1 | - | 1.2 | 1.0 | 0.15 |
| | 1st layer | 4 | 93.80 | | - | | 3.0 | 1.2 | 2.0 | - |
| Comparative Example 1 | 2nd layer | 6 | 88.55 | | 9 | 0.1 | - | 1.2 | 1.0 | 0.15 |
| | 1st layer | 4 | 87.55 | | 9 | 0.1 | - | 1.2 | 2.0 | 0.15 |
| Comparative Example 2 | 2nd layer | 6 | | 82.55 | 15 | 0.1 | | 1.2 | 1.0 | 0.15 |
| | 1st layer | 4 | | 93.80 | - | | 3.0 | 1.2 | 2.0 | - |
| Comparative Example 3 | 2nd layer | 6 | 79.80 | | 15 | - | 3.0 | 1.2 | 1.0 | - |
| | 1st layer | 4 | 93.80 | | - | - | 3.0 | 1.2 | 2.0 | - |
| Comparative Example 4 | 2nd layer | 6 | 82.55 | | 15 | 0.1 | - | 1.2 | 1.0 | 0.15 |
| | 1st layer | 4 | 96.55 | | - | 0.1 | - | 1.2 | 2.0 | 0.15 |
| Comparative Example 5 | 2nd layer | 4 | 94.8 | | - | - | 3.0 | 1.2 | 1.0 | - |
| | 1st layer | 6 | 81.55 | | 15 | 0.1 | - | 1.2 | 2.0 | 0.15 |

Experimental Example

### (1) Evaluation on rapid charging property at room temperature and 35 minutes cycle property

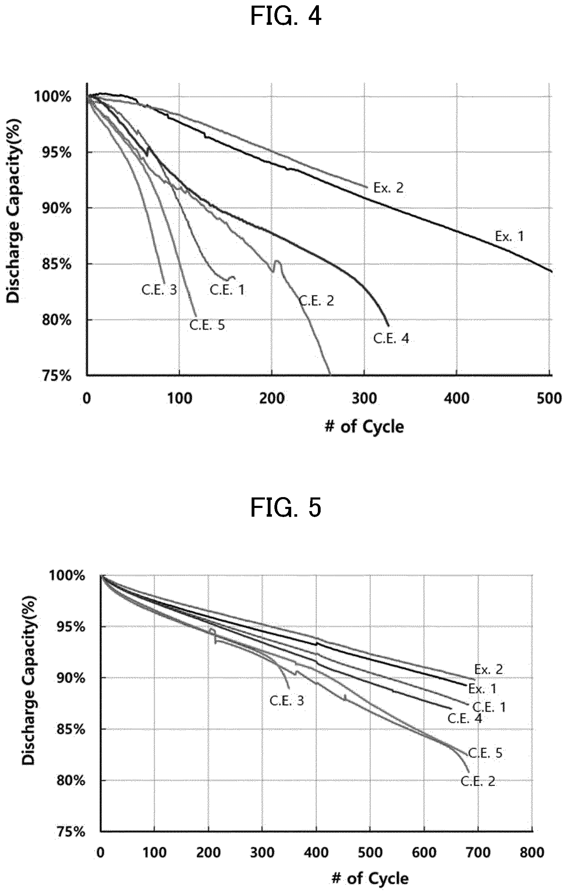

FIG. 4 is a graph showing rapid charging cycle properties at room temperature of secondary batteries according to Examples (abbreviated as Ex.) and Comparative Examples (abbreviated as C.E.).

Specifically, rapid charging at room temperature (25 °C) for 35 minutes within a range of SOC8-80 by divided intervals and discharging (0.33C, SOC8, CC cut-off) were repeated for the secondary batteries of Examples and Comparative Examples. A discharge capacity retention relative to an initial discharge capacity was measured as a percentage.

### (2) Evaluation on 0.3C life-span

FIG. 5 is a graph showing results of evaluating 0.3C life-span properties of secondary batteries according to Examples (abbreviated as Ex.) and Comparative Examples (abbreviated as C.E.).

Specifically, the secondary batteries of Examples and Comparative Examples were repeatedly charged and discharged at a rate of 0.3C in a range from 2.5 to 4.2V in a 94% depth of discharge (DOD) condition, and a discharge capacity retention relative to an initial discharge capacity was measured as a percentage.

Referring to FIGS. 4 and 5, the secondary batteries of Comparative Examples had remarkably degraded cycle properties compared to those from the batteries of Examples having the compositions of the active material/the conductive material according to the above-described exemplary embodiments.

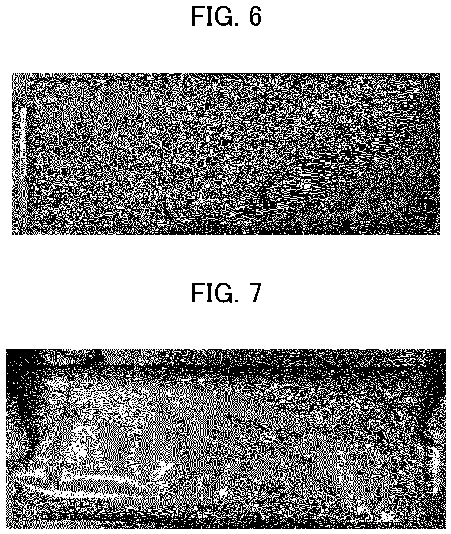

FIGS. 6 and 7 are images showing states after a full charging of batteries according to Example 1 and Comparative Example 5, respectively.

Referring to FIGS. 6 and 7, in the battery of Comparative Example 5, the anode material layer was peeled-off from a surface of the anode current collector due to an expansion of the first anode active material, and wrinkles and damages of an outer surface were explicitly detected.

## Claims

1. An anode for a secondary battery, comprising:
an anode electrode current collector;
a first anode active material layer formed on a surface of the anode current collector, wherein the first anode active material layer comprises a first anode active material including artificial graphite and the first anode active material layer does not comprise carbon nanotube; and
a second anode active material layer formed on the first anode material layer, wherein the second anode active material layer comprises a second anode active material including a silicon-based active material and carbon nanotube as a second conductive material.

2. The anode for a secondary battery according to claim 1, wherein the first anode active material consists of artificial graphite.

3. The anode for a secondary battery according to claim 1, wherein the second anode active material comprises a mixture of artificial graphite and the silicon-based active material.

4. The anode for a secondary battery according to claim 3, wherein a content of the silicon-based active material based on a total weight of the second anode active material is from 9 wt% to 30 wt%.

5. The anode for a secondary battery according to claim 3, wherein a content of the silicon-based active material based on a total weight of the second anode active material is from 10 wt% to 20 wt%.

6. The anode for a secondary battery according to claim 1, wherein a thickness of the second anode active material layer is greater than a thickness of the first anode active material layer.

7. The anode for a secondary battery according to claim 1, wherein the first anode active material layer is in contact with the surface of the anode current collector, and the second anode active material layer is in contact with a top surface of the first anode active material layer.

8. The anode for a secondary battery according to claim 1, wherein the first anode active material further comprises a first conductive material that is a carbon-based material except for carbon nanotube.

9. The anode for a secondary battery according to claim 1, wherein the first conductive material comprises at least one selected from the group consisting of graphene, carbon black, acetylene black, Ketjen black, Super P and hard carbon.

10. The anode for a secondary battery according to claim 1, wherein the second anode active material layer further comprises a carbon nanotube dispersing agent.

11. The anode for a secondary battery according to claim 1, wherein the silicon-based active material comprises at least one selected from the group consisting of silicon (Si), a silicon alloy, SiOx (0<x<2), and SiOx (0<x<2) containing a lithium compound.

12. A lithium secondary battery, comprising:
the anode for a secondary battery according to claim 1; and
a cathode facing the anode and comprising a lithium-transition metal composite oxide.
